# EUROPEAN PATENT APPLICATION

(11) **EP 2 903 186 A1**
(43) Date of publication of application: **05.08.2015**
(21) Application number: 13841461.0
(22) Date of filing: 18.01.2013
(51) Int. Cl.: H04B 10/50

(54) **BLUETOOTH APPARATUS WITH ULTRA-LOW STANDBY POWER CONSUMPTION AND IMPLEMENTATION METHOD THEREOF**

(30) Priority: 29.09.2012 CN 201210372539
(71) Applicant: SHENZHEN SHI KISB ELECTRONIC CO., LTD., Guangdong 518126 (CN)
(72) Inventor: PEI, Weicai, Xixiang Town Baoan Shenzhen, Guangdong 518126 (CN)
(74) Representative: Decamps, Alain René François
(86) International application number: PCT/CN2013/070712
(87) International publication number: WO 2014/048079

(57) **Abstract**

The present invention provides a Bluetooth apparatus with ultra-low standby power consumption and an implementation method thereof. The Bluetooth apparatus comprises a main body and a switch apparatus. A control circuit is arranged in the main body, and the control circuit comprises a Bluetooth module, a low-level-triggered ultra-low power consumption switch module and a high-level-triggered reset switch module. The low-level-triggered ultra-low power consumption switch module is connected to a deep sleep control pin of the Bluetooth module, and the high-level-triggered reset switch module is connected to an ON/OFF end of the Bluetooth module. A switching apparatus controls the low-level-triggered ultra-low power consumption switch module and the high-level-triggered reset switch module to work. According to the present invention, when a 50 mAh battery is used on a Bluetooth headset, the standby current is 0.5 uA, and theoretical standby time can reach 2500 hours, which is amounted to 104 days. When the novel technology is used on the Bluetooth headset, standby time can increase from 4 days to 104 days, with an increase of 100 days of standby time, which greatly reduces charging frequency and improves convenience in use.

## Description

### Technical Field

The present invention discloses a Bluetooth apparatus, and in particular, a Bluetooth apparatus with ultra-low standby power consumption and a method for implementing same.

### Related Art

As mobile phones are applied more and more in people's life, people understand the mobile phones more and more thoroughly and pay more and more attention to security of use of mobile phones. During use of mobile phones, electromagnetic radiation is the biggest harm to people when people use mobile phones. With gradual development of wireless transmission technologies, Bluetooth technologies have been gradually applied to the field of communications, and Bluetooth headsets can effectively reduce harm caused by electromagnetic radiation to a user. In most of the existing Bluetooth headsets, a built-in rechargeable battery is usually used as a power supply. However, due to the limitation of the volume of a Bluetooth headset, it is impossible to make the volume of the built-in battery very big. The battery is usually a lithium battery of 50 mAh, and when a current Bluetooth headset is in a standby state, a standby current is usually 0.5 mA to 1 mA. Therefore, theoretical standby time of the Bluetooth headset is usually 50 hours to 100 hours, and the user needs to charge the headset every two or three days, resulting in great inconvenience in use.

### Summary

For the shortcomings in the prior art that a Bluetooth headset has short standby time and is inconvenient to use, the present invention provides a new Bluetooth apparatus with ultra-low standby power consumption and a method for implementing same. The Bluetooth apparatus includes a Bluetooth headset and a base used in combination with the Bluetooth headset. When the Bluetooth headset is not in use and is placed on the base, an internal circuit of the Bluetooth headset is triggered to cause the Bluetooth headset to enter a deep sleep state, which can greatly reduce the power consumption and extend the standby time.

The technical solution adopted by the present invention to solve the technical problem of the present invention is a Bluetooth apparatus with ultra-low standby power consumption. The Bluetooth apparatus includes a main body and a switch apparatus. A control circuit is arranged in the main body. The control circuit includes a Bluetooth module, a low-level-triggered ultra-low power consumption switch module, and a high-level-triggered reset switch module. The low-level-triggered ultra-low power consumption switch module is connected to a deep sleep control pin of the Bluetooth module. The high-level-triggered reset switch module is connected to an ON/OFF end of the Bluetooth module. The switch apparatus controls the low-level-triggered ultra-low power consumption switch module and the high-level-triggered reset switch module to work.

A method for implementing the Bluetooth apparatus with ultra-low standby power consumption, where the method is: arranging a trigger switch on a main body of the Bluetooth apparatus, when the Bluetooth apparatus is not in use, triggering a deep sleep control pin through the trigger switch, to make the Bluetooth apparatus in a deep sleep state, and when the Bluetooth apparatus is in use, awakening a deep sleep mode through the trigger switch, to make the Bluetooth apparatus in a normal use state.

The technical solution adopted by the present invention to solve the technical problem thereof further includes:
The switch apparatus is a base matching the main body, and the main body and the base are electrically connected through contacts.

The contacts include out_contact, MCU_charger, and GND. The out_contact contact in the main body is electrically connected to the low-level-triggered ultra-low power consumption switch module and the high-level-triggered reset switch module. The GND contact is grounded. The MCU_charger contact charges a battery of the main body. The out_contact contact in the base is in communication with the GND contact. A charger_5v contact is electrically connected to a charging output interface.

The low-level-triggered ultra-low power consumption switch module includes a MOS transistor Q7 and a capacitor C15. The MOS transistor Q7 and the capacitor C15 are connected in series. The MOS transistor is connected to a positive power end. The capacitor C15 is connected to the deep sleep control pin of the Bluetooth module. A trigger end of the MOS transistor Q7 is connected to the switch apparatus.

The high-level-triggered reset switch module includes a capacitor C16, a bipolar junction transistor Q1, and a bipolar junction transistor Q8. One end of the capacitor C16 is connected to the switch apparatus, and the other end of the capacitor C16 is connected to the base of the bipolar junction transistor Q8. One end of the bipolar junction transistor Q8 is grounded, and the other end of the bipolar junction transistor Q8 is connected to the base of the bipolar junction transistor Q1. One end of the bipolar junction transistor Q1 is connected to positive power, and the other end of the bipolar junction transistor Q1 is connected to the ON/OFF end of the Bluetooth module.

A receiving slot for placing the main body of the Bluetooth headset is arranged on the base.

A cover body able to be opened and closed is mounted on the base.

A limit ring is fixedly arranged on the main body of the Bluetooth headset, and corresponds to a through hole on the cover body.

A magnet is arranged in the base, and a magnet is arranged in a corresponding position on the main body of the Bluetooth headset.

The beneficial effects of the present invention are as follows: According to the present invention, when a battery of 50 mAh is used on a Bluetooth headset, a standby current is 0.5 uA, and theoretical standby time may reach 2500 hours, which corresponds to 104 days. When the novel technology is used on a Bluetooth headset, standby time may increase from 4 days to 104 days, and standby time is increased by 100 days, which greatly reduces frequency of charging and improves convenience in use.

### Brief description of the drawings

FIG. 1 is a schematic structural perspective view of the present invention;
FIG. 2 is a schematic structural view of a main body of a Bluetooth headset in the present invention;
FIG. 3 is a schematic structural view of a base in the present invention;
FIG. 4 is a schematic view of a process of putting a main body of a Bluetooth headset into a base according to the present invention;
FIG. 5 is a schematic view of a process of taking a main body of a Bluetooth headset out of a base according to the present invention;
FIG. 6 is a block circuit diagram of the present invention; and
FIG. 7 is a schematic circuit diagram of the present invention.

In the figures, 1-Main body of a Bluetooth headset, 2-Base, 3-Cover body, 4-Limit ring, 5-Out_contact contact of the Bluetooth headset, 6-GND contact of the Bluetooth headset, 7-MCU_charger contact of the Bluetooth headset, 8-Receiving slot, 9-Through hole, 10-Charger_5v contact of the base, 11-GND contact of the base, and 12-Out_contact contact of the base.

### Detailed description

This embodiment is a preferred implementation manner of the present invention, and other embodiments in which the principle and basic structure are the same as or similar to those in this embodiment should fall within the protection scope of the present invention.

The present invention relates to a method for implementing a Bluetooth apparatus with ultra-low standby power consumption. The method is: arranging a trigger switch on a main body of the Bluetooth apparatus, when the Bluetooth apparatus is not in use, triggering a deep sleep control pin through the trigger switch, to make the Bluetooth apparatus in a deep sleep state, and when the Bluetooth apparatus is in use, awakening a deep sleep mode through the trigger switch, to make the Bluetooth apparatus in a normal use state.

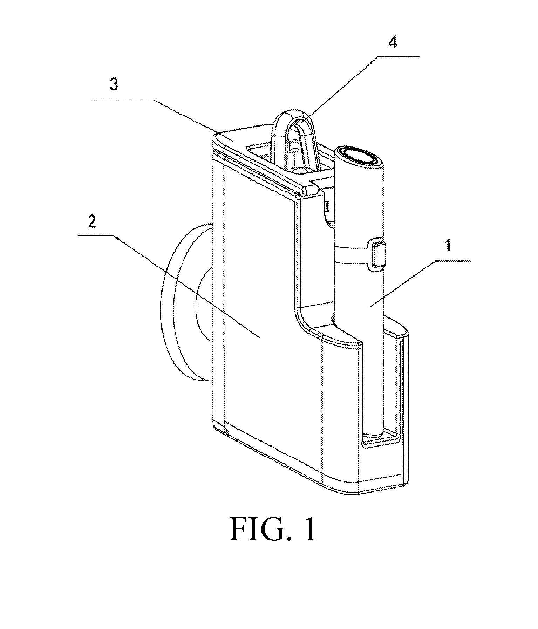

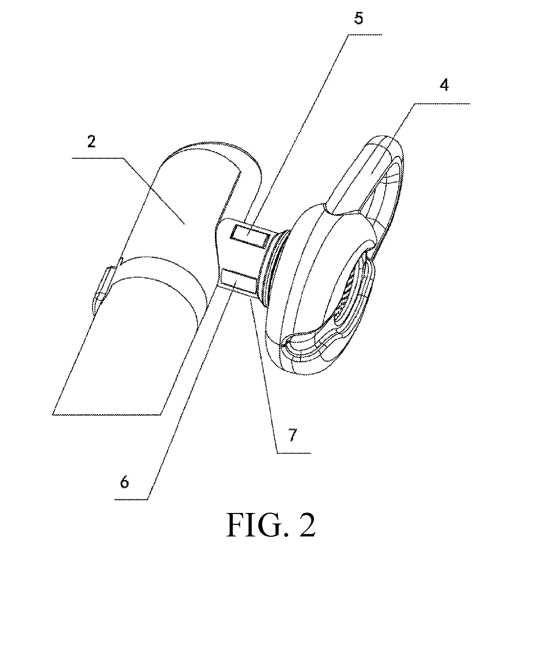

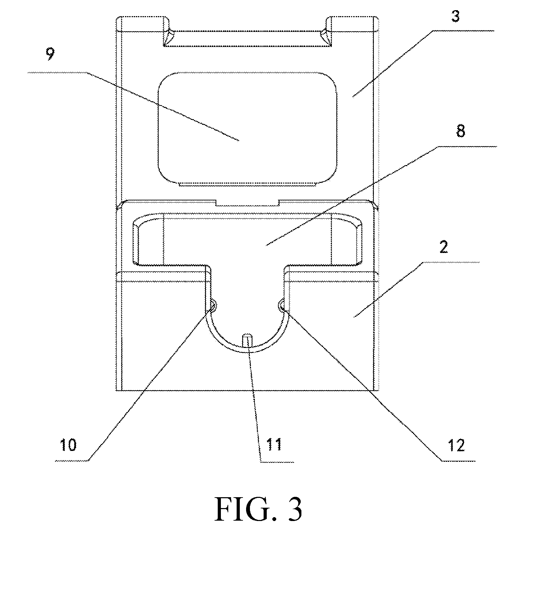

Referring to FIG. 1, FIG. 2, and FIG. 3, the present invention mainly includes two main parts, that is, a main body 1 and a switch apparatus of a Bluetooth headset. In this embodiment, the switch apparatus is a base 2. In this embodiment, a receiving slot 8 is arranged on the base 2 and is used for placing the main body 1 of the Bluetooth headset. A cover body 3 is arranged on the base 2. The cover body 3 is rotatable. When the main body 1 of the Bluetooth headset is put into the receiving slot 8, the cover body 3 is turned to block the main body 1 of the Bluetooth headset and prevents the main body 1 from falling off. In this embodiment, a limit ring 4 is fixedly arranged at the top of the main body 1 of the Bluetooth headset. A through hole 9 is opened in a position on the cover body 3 corresponding to the limit ring 4. When the cover body 3 is closed, the limit ring 4 is arranged in the through hole 9 to clamp the cover body 3. In this embodiment, the base 2 and the main body 1 of the Bluetooth headset are fixedly provided with a magnet (not drawn in the figures) separately, and the base 2 and the main body 1 of the Bluetooth headset may be fitted together through attraction of the magnets, to make contacts on the base 2 and the main body 1 of the Bluetooth headset contact each other. In this embodiment, the base 2 and the main body 1 of the Bluetooth headset contact through three contacts. The contacts on the main body 1 of the Bluetooth headset include an out_contact contact 5 of the Bluetooth headset, a MCU_charger contact 7 of the Bluetooth headset, and a GND contact 6 of the Bluetooth headset. The contacts on the base 2 include an out_contact contact 12 of the base, a charger_5v contact 10 of the base, and a GND contact 11 of the base.

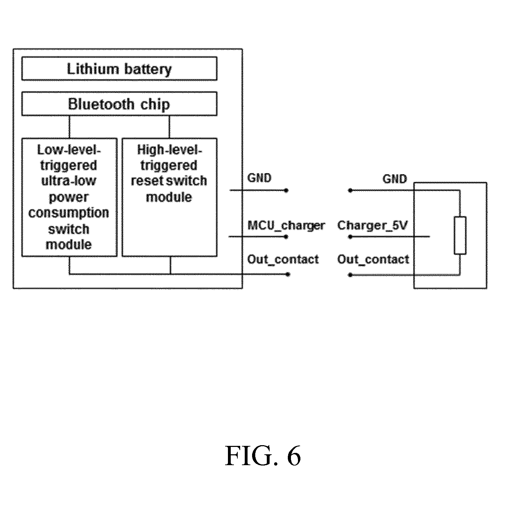

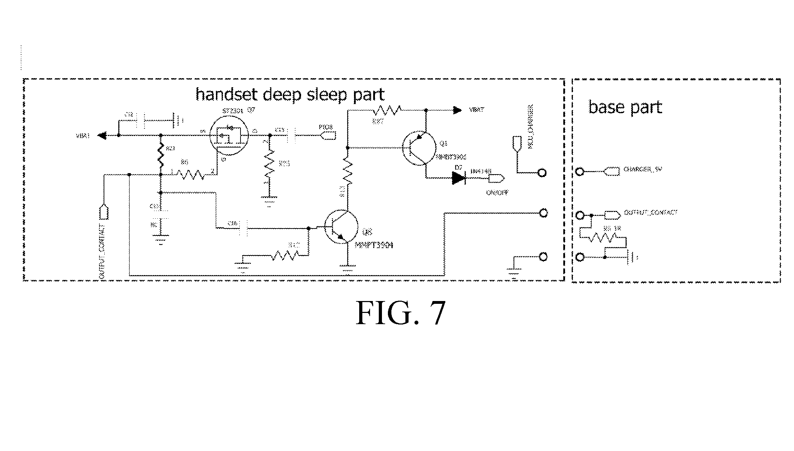

Referring to FIG. 6 and FIG. 7, in this embodiment, the main body 1 of the Bluetooth headset and the base 2 are provided with a control circuit. The control circuit in the main body 1 of the Bluetooth headset mainly includes a Bluetooth module, a low-level-triggered ultra-low power consumption switch module, and a high-level-triggered reset switch module. The Bluetooth module is mainly a Bluetooth chip. The main body 1 of the Bluetooth headset is further provided with a built-in lithium battery that supplies power to the Bluetooth chip. The low-level-triggered ultra-low power consumption switch module is connected to a deep sleep control pin of the Bluetooth module. The high-level-triggered reset switch module is connected to an ON/OFF end of the Bluetooth module. The switch apparatus controls the low-level-triggered ultra-low power consumption switch module and the high-level-triggered reset switch module to work. In this embodiment, the low-level-triggered ultra-low power consumption switch module includes a MOS transistor Q7 and a capacitor C15. The MOS transistor Q7 and the capacitor C15 are connected in series. The MOS transistor is connected to a positive power end. The capacitor C15 is connected to the deep sleep control pin of the Bluetooth module. A trigger end of the MOS transistor Q7 is connected to the switch apparatus. The high-level-triggered reset switch module includes a capacitor C16, a bipolar junction transistor Q1, and a bipolar junction transistor Q8. One end of the capacitor C16 is connected to the switch apparatus, and the other end of the capacitor C16 is connected to the base of the bipolar junction transistor Q8. One end of the bipolar junction transistor Q8 is grounded, and the other end of the bipolar junction transistor Q8 is connected to the base of the bipolar junction transistor Q1. One end of the bipolar junction transistor Q1 is connected to positive power, and the other end of the bipolar junction transistor Q1 is connected to the ON/OFF end of the Bluetooth module. In this embodiment, the out_contact contact 5 in the main body 1 of the Bluetooth headset is electrically connected to the low-level-triggered ultra-low power consumption switch module and the high-level-triggered reset switch module, that is, the out_contact contact 5 is separately connected to the capacitor C16 and a trigger end (that is, the gate) of the MOS transistor Q7. The GND contact 6 is grounded, the MCU_charger contact 7 charges the built-in lithium battery of the main body, the out_contact contact 12 in the base 2 is in communication with the GND contact 11 through a resistor R5, and the charger_5v contact 10 is electrically connected to a charging output interface.

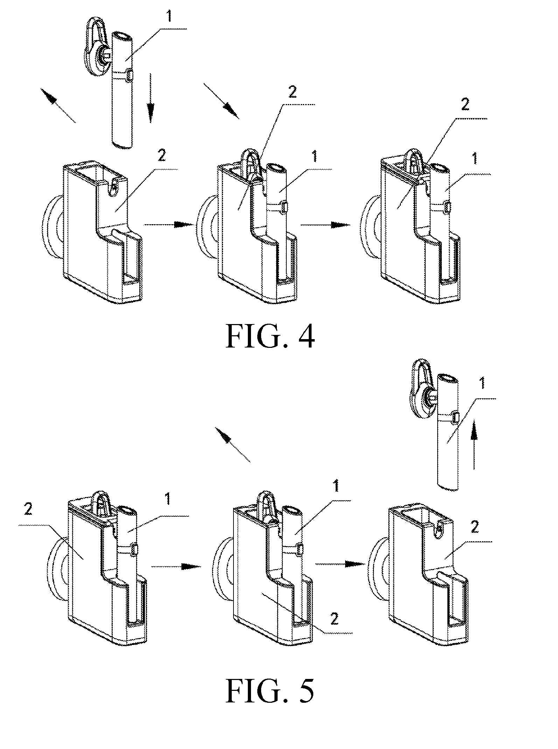

Referring to FIG. 4, according to the present invention, in use, the cover body 3 is closed after the main body 1 of the Bluetooth headset is placed on the base 2. In this case, the contacts on the main body 1 of the Bluetooth headset and the base 2 are attracted through the magnets in the main body 1 and the base 2 for mutual conduction. The three contacts on the main body 1 of the Bluetooth headset, that is, out_contact, MCU_charger, and GND, are respectively in contact with the three contacts on the base 2, that is, out_contact, charger_5v, and GND. The charger_5v is only used for charging a battery of the headset. When the two out_contact contacts on the main body 1 of the Bluetooth headset and the base 2 are in communication, the out_contact contact in the main body 1 of the Bluetooth headset is pulled to a low potential, and a G pin of the MOS transistor Q7 is also in a low potential. In this case, the MOS transistor Q7 is in an ON state. Due to a transient effect of the capacitor C15, a positive pulse of 3.7 V is produced at a PIO8 port. The PIO8 port is directly connected to the deep sleep control pin of the main Bluetooth chip. After receiving the positive pulse sent from the PIO8 port, the Bluetooth chip automatically enters a deep sleep mode. In this case, the standby current is 0.5 uA, and the objective of ultra-low power consumption is achieved.

Referring to FIG. 5, according to the present invention, in normal use, the cover body 3 is opened, the main body 1 of the Bluetooth headset is taken up from the base 2, and after the contacts are disconnected, the Bluetooth headset automatically enters a normal ON mode. As long as the main body 1 of the Bluetooth headset is taken up from the base 2, the out_contact contact in the main body 1 of the Bluetooth headset becomes a high potential. Due to a transient effect of the capacitor C16, a B pole (that is, the base) of the bipolar junction transistor Q8 has a high pulse to turn on the bipolar junction transistor Q8. In this case, the B pole (that is, the base) of the bipolar junction transistor Q8 is in a low potential, to cause the bipolar junction transistor Q1 to be turned on at the same time. Therefore, there is also a positive pulse of 3.7 V at the ON/OFF end. The ON/OFF end is directly connected to an ON pin of the Bluetooth headset. After receiving a high-potential pulse from the ON/OFF end, the Bluetooth headset automatically awakens the deep sleep mode to enter the normal functions of power-on and phone connection.

According to the present invention, when a battery of 50 mAh is used on a Bluetooth headset, a standby current is 0.5 uA, and theoretical standby time may reach 2500 hours, which corresponds to 104 days. When the novel technology is used on a Bluetooth headset, standby time may increase from 4 days to 104 days, and standby time is increased by 100 days, which greatly reduces frequency of charging and improves convenience in use.

## Claims

1. A Bluetooth apparatus with ultra-low standby power consumption, **characterized in that** the Bluetooth apparatus comprises a main body and a switch apparatus, a control circuit is arranged in the main body, the control circuit comprises a Bluetooth module, a low-level-triggered ultra-low power consumption switch module, and a high-level-triggered reset switch module, the low-level-triggered ultra-low power consumption switch module is connected to a deep sleep control pin of the Bluetooth module, the high-level-triggered reset switch module is connected to an ON/OFF end of the Bluetooth module, and the switch apparatus controls the low-level-triggered ultra-low power consumption switch module and the high-level-triggered reset switch module to work.

2. The Bluetooth apparatus with ultra-low standby power consumption according to claim 1, **characterized in that** the switch apparatus is a base matching the main body, and the main body and the base are electrically connected through contacts.

3. The Bluetooth apparatus with ultra-low standby power consumption according to claim 2, **characterized in that** the contacts comprise out_contact, MCU_charger, and GND, the out_contact contact in the main body is electrically connected to the low-level-triggered ultra-low power consumption switch module and the high-level-triggered reset switch module, the GND contact is grounded, the MCU_charger contact charges a battery of the main body, the out_contact contact in the base is in communication with the GND contact, and a charger_5v contact is electrically connected to a charging output interface.

4. The Bluetooth apparatus with ultra-low standby power consumption according to claim 1 or 2 or 3, **characterized in that** the low-level-triggered ultra-low power consumption switch module comprises a MOS transistor Q7 and a capacitor C15, the MOS transistor Q7 and the capacitor C15 are connected in series, the MOS transistor is connected to a positive power end, the capacitor C 15 is connected to the deep sleep control pin of the Bluetooth module, and a trigger end of the MOS transistor Q7 is connected to the switch apparatus.

5. The Bluetooth apparatus with ultra-low standby power consumption according to claim 1 or 2 or 3, **characterized in that** the high-level-triggered reset switch module comprises a capacitor C16, a bipolar junction transistor Q1, and a bipolar junction transistor Q8, one end of the capacitor C16 is connected to the switch apparatus, the other end of the capacitor C16 is connected to the base of the bipolar junction transistor Q8, one end of the bipolar junction transistor Q8 is grounded, the other end of the bipolar junction transistor Q8 is connected to the base of the bipolar junction transistor Q1, one end of the bipolar junction transistor Q1 is connected to positive power, and the other end of the bipolar junction transistor Q1 is connected to the ON/OFF end of the Bluetooth module.

6. The Bluetooth apparatus with ultra-low standby power consumption according to claim 2 or 3, **characterized in that** a receiving slot for placing the main body of the Bluetooth headset is arranged on the base.

7. The Bluetooth apparatus with ultra-low standby power consumption according to claim 6, **characterized in that** a cover body able to be opened and closed is mounted on the base.

8. The Bluetooth apparatus with ultra-low standby power consumption according to claim 7, **characterized in that** a limit ring is fixedly arranged on the main body of the Bluetooth headset, and corresponds to a through hole on the cover body.

9. The Bluetooth apparatus with ultra-low standby power consumption according to claim 6, **characterized in that** a magnet is arranged in the main body, and a magnet is arranged in a corresponding position on the main body of the Bluetooth headset.

10. A method for implementing the Bluetooth apparatus with ultra-low standby power consumption according to any one of claims 1 to 9, **characterized in that** the method is: arranging a trigger switch on a main body of the Bluetooth apparatus, when the Bluetooth apparatus is not in use, triggering a deep sleep control pin through the trigger switch, to make the Bluetooth apparatus in a deep sleep state, and when the Bluetooth apparatus is in use, awakening a deep sleep mode through the trigger switch, to make the Bluetooth apparatus in a normal use state.
